# EUROPEAN PATENT SPECIFICATION

(11) **EP 2 182 797 B1**
(45) Date of publication and mention of the grant of the patent: **29.03.2017**
(21) Application number: 08786670.3
(22) Date of filing: 31.07.2008
(51) Int. Cl.: A01K 73/045

(54) **HIGH STABILITY, HIGH EFFICIENCY TRAWL DOOR**
HOCHSTABILES, HOCHEFFIZIENTES SCHERBRETT
PANNEAU DE CHALUT À HAUTE STABILITÉ ET HAUTE EFFICACITÉ

(30) Priority: 31.07.2007 US 962867 P; 05.05.2008 US 126487; 18.06.2008 US 132414
(43) Date of publication of application: 12.05.2010
(73) Proprietor: Thyborøn Skibssmedie A/S, 7680 Thyborøn (DK)
(72) Inventor: SAFWAT, Sherif Adham, Bainbridge Island, WA 98110 (US)
(74) Representative: Olsen, Peter Vestergaard
(86) International application number: PCT/EP2008/060045
(87) International publication number: WO 2009/016224

(56) References cited:
- WO-A-82/02646
- WO-A-2006/011163
- WO-A-2006/048258
- FR-A- 2 852 200
- GB-A- 2 161 351

## Description

### Technical Field

The present disclosure relates generally to trawl doors used for trawl fishing, seismic surveillance line spreading and spreading of other items towed in water, and, more particularly, to trawl doors adapted for stable, more efficient operation at all angles of attack including larger angles of attack.

### Background Art

A trawl is a large net generally in the shape of a truncated cone trailed through a water column or dragged along a sea bottom to gather marine life including fish. Methods and apparatuses for spreading a trawl trailed behind a moving towing vessel, frequently identified as "trawl doors," are well known. Usually, a trawl door attaches to a towing vessel by a single main towing warp or other towing line secured to the trawl door near or at the trawl door's midpoint. The trawl then attaches to the trawl door by a pair of towing bridles, i.e. an upper and a lower towing bridle, respectively secured to the trawl door at or near opposite ends thereof. Trawl doors are also identified by other names, most commonly including "otter boards" and "doors". Trawl doors, when used in the seismic industry are often referred to as "deflectors" or "paravanes," and may have several main "wings", main "plates" and/or "slats."

While a towed trawl door having a particular shape may operate stably throughout a range of angle of attack, when towed through water at a larger angle of attack most trawl doors exhibit instability and/or low efficiency, i.e. high drag. It is important to note that usage and meaning of the term "larger angle of attack" varies from fishery to fishery. Furthermore, trawl doors otherwise configured for a certain angle of attack when aboard ship ultimately fish at different angles of attack depending upon the lengths respectively of the sweep and/or bridles coupled to the trawl door. Similarly, the lengths respectively of a trawl's footropes and headropes can affect a trawl door's angle of attack while being towed through water. Moreover, how the towing vessel maneuvers can vary a trawl door's angle of attack. Lastly, the preceding factors that affect a towed trawl door's actual angle of attack do not do so independently. Rather, these factors act in concertedly in affecting a towed trawl door's actual operating angle of attack.

At a larger angle of attack such as over thirty degrees (30°), and especially at over thirty-five degrees (35°), most trawl doors exhibit instability and/or low efficiency, i.e. high drag. However, trawl doors commonly operate at such larger angles of attack to create enough drag induced directional forces on the trawl doors so as to impart sufficient stability to the trawl door system to thereby maintain the trawl doors in a workable orientation in the presence of a multitude of destabilizing forces routinely imparted to a trawl door during use. Destabilizing forces result from, for example, side currents, imperfections in rigging, and loss of forward through-water speed affecting an inboard trawl door during turning of a trawling vessel. For example, when a towing vessel turns the inboard trawl door can become almost stationary relative to the water. As is readily apparent, slowing a trawl door down in relationship to the water reduces its spreading force, i.e. the trawl door's drag induced directional force. A similar situation can arise when a trawl door experiences a strong side current. Another condition which can cause trawl door instability is when some portion of the trawl contacts the sea floor. As is readily apparent, a trawl contacting the sea floor increases the force applied to the trawl door through the lower towing bridle in comparison with the force applied through the upper towing bridle. Stabilizing trawl doors when they operate under conditions such as those described above usually requires that the trawl doors operate at a larger angle of attack particularly at slower towing speeds.

Higher angles of attack are required at slower towing speeds to obtain a sufficiently large drag induced force vector required to stabilize trawl doors at slower towing speeds, e.g. under four and one-half (4.5) knots, and especially two (2.0) to three and nine tenths (3.9) knots, as compared to at faster towing speeds, e.g. over 5.0 knots. When trawling at slower towing speeds trawl doors generally cannot overcome the plethora of destabilizing dynamic forces that may affect their operation. Conversely, at faster towing speeds trawl doors generally are able to overcome such destabilizing forces.

Specific considerations concerning trawl door instability include the fact that few parts of the world experience currents in excess of four and one-half (4.5) knots. However, during a turn an inboard trawl door's slower forward through-water speed affects the door's operation akin to a side current. Furthermore, when trawl doors lose their ability to spread they may tangle with each other, a phenomenon known as "crossing the doors." Remedying "crossed trawl doors" is a dangerous and time consuming procedure At faster towing speeds, e.g. over 5.0 knots, the effect of side currents and turns on trawl door operation is generally nullified by the towing vessel's faster towing speed.

The instability exhibited by trawl doors when operating at a larger angle of attack can be attributed to a phenomenon frequently referred to as "dynamic stall." An airfoil or hydrofoil stalls when fluid flowing past the airfoil or hydrofoil separates therefrom. Stall may be a steady type wherein the location at which the flow separates from the airfoil or hydrofoil is essentially stationary. Alternatively, flow separation may be of an unsteady type wherein the separation location with respect to the airfoil or hydrofoil varies with time and flow conditions. In the scientific literature for fluid dynamics, dynamic stall of helicopter rotor blades and rotating stall of axial compressor blades provide well recognized examples of undesirable consequences resulting from unsteady flow separation. If unchecked, large oscillatory forces and moments produced in both types of stall can result in severe structural damage and erratic performance of such devices.

As described in "Evaluation of Turbulence Models for Unsteady Flows of an Oscillating Airfoil" by G. R. Srinivasan, J. A. Ekaterinaris and W. J. McCroskey, Computers & Fluids, vol. 24, no. 7, pp. 833-861, the term dynamic stall usually refers to the unsteady separation and stall phenomena of aerodynamic bodies or lifting surfaces. As described in United States Patent no. 6,267,331 (the '331 patent), a dominant feature characterizing dynamic stall on an airfoil or hydrofoil is a strong vortical flow, which begins near the leading-edge, enlarges, and then travels downstream along the foil. When a airfoil or hydrofoil reaches fairly large angles of attack, past the static stall angle limit, the resulting unsteady flowfield is characterized by massive separation and large-scale vortical structures. One important difference between this flowfield structure and that generated by the static stall is the large hysteresis in the unsteady separation and reattachment process. When dynamic stall occurs, maximum values of lift, drag, and pitching-moment coefficients can greatly exceed their static counterparts, and not even the qualitative behavior of these conditions can be reproduced by neglecting the unsteady motion of the airfoil's or hydrofoil's surface. Typically, the problem of dynamic stall is addressed by some form of airfoil geometry modification (e.g. leading-edge slat), or boundary-layer control (e.g. blowing or suction), where these changes are geared specifically to the leading-edge region where the vortex originates. The >331 patent states that all methods of dynamic stall control that have been attempted heretofore have been less than satisfactory. There is thus a widely recognized need for, and it would be highly advantageous to have, a more satisfactory method of dynamic stall control for airfoils and hydrofoils than methods now known in the art.

International Application no. PCT/IS2005/000016 published 2 February 2006, as International Publication No. WO 2006/011163 A3 that is entitled "High Speed, Increased Hydrodynamic Efficiency, Light-Weight Molded Trawl Door and Methods for Use and Manufacture" ("the '016 PCT patent application") describes molding portions of trawl door deflector bodies having an airfoil profile from synthetic materials. The preferred synthetic material for forming portions of airfoil profile deflector bodies identified in the '016 PCT patent application is a polyamide (nylon) combined with an elastomer in a ratio such that the solidified synthetic material receives impacts fracture-free.

International Application no. PCT/EP2005/011722 published 11 November 2006, as International Publication No. WO 2006/048258 A1 that is entitled "Higher Efficiency Pelagic Trawl Door Construction Employing Universally Available Materials and Methods" ("the '722 PCT patent application") describes a V-shaped trawl door configuration that includes a plurality of leading edge slats. In one embodiment disclosed in the '722 PCT patent application, the arcuate deflector bodies and slats are all formed from plate material, preferably steel. Instead of using arcuate deflector bodies formed from plate material, as disclosed in the '016 PCT patent application alternative embodiment deflector bodies in accordance with the '722 PCT patent application are formed with an airfoil profile and are molded from a synthetic material.

The highly efficient trawl doors disclosed both in the '016 and '722 PCT patent applications are generally characterized by a main deflector body having an airfoil profile specifically identified in the '016 PCT patent application, and at least one and preferably two (2) leading edge slats.

The trawl doors disclosed in the '016 and '722 PCT patent applications are essentially a method for the manufacture and use of a highly efficient trawl door that operates best at faster towing speeds. Exhaustive engineering and flume tank testing of these trawl doors initially indicated that they should function better than all known trawl doors at all angles of attack used in the pelagic fishing industry including larger angles of attack. Unfortunately, trawl doors constructed in accordance with the disclosures of the '016 and '722 PCT patent applications, despite being stable at shallower angles of attack up to at least eighteen degrees (18°) used by faster towing speed trawling vessels, have proven to be useful only at faster towing speed and shallower angles of attack.

A majority of the world's trawling vessels operate at what are considered slower towing speeds, thereby requiring trawl doors that can be fished or deployed at larger angles of attack such as approximately thirty degrees (30°), and especially from thirty (30°) to forty degrees (40 °) or more with approximately thirty-six degrees (36°) being commonly used in the Alaska Pollock fishery. At these angles of attack, trawl doors constructed in accordance with the '016 and '722 PCT patent applications generally fail. In actual use, these trawls doors have exhibited instability at larger angles of attack, i.e. over thirty degrees (30°). While when used by some vessels such trawl doors have functioned at a larger angle of attack, but not better than conventional trawl doors, when used by other vessels, perhaps due to variations in riggings, the trawl doors fail completely. That is, trawl doors constructed in accordance with the '016 and '722 PCT patent applications when used at higher angles of attack in slower towing speed fisheries are unable to maintain a stable position, and are useless generally performing worse than other contemporary conventional trawl doors. In general such trawl doors are so unstable at angles of attack of thirty-five degrees (35°) and greater, that none have been purchased by anyone for such use.

In one instance, after exhaustive engineering at great expense, a trawl door combining the teachings of the '016 and '722 PCT patent applications was tried in the Alaska Pollock fishery. However, the trawl doors exhibited much higher drag and failed to adequately spread the trawl. That is, these trawl doors spread the trawl less than that provided by conventional trawl doors, and the drag on the vessel was greater than that of conventional trawl doors. Thus, use of the doors was rejected in this particular fishery, which is one of the largest, best managed and healthiest fisheries in the world. Up to the present, a pair of trawl doors constructed in accordance with the '016 and '722 PCT patent applications has not been sold into the Alaska Pollock fishery, or into any moderate to slower towing speed trawl fishery.

To make trawl doors combining the teachings of the '016 and '722 PCT patent applications function well at slower towing speeds, a possibility was considered for:
1. making the trawl door about twice (2X) as large as those used at faster towing speeds; and
2. setting the doors at the same smaller angles of attack as used at faster towing speeds, e.g. about eighteen degrees (18°).
Presumably, such an adaptation of these trawl doors when towed at slower towing speed would significantly increase lift generated at smaller angles of attack while also significantly reducing drag. The disadvantages of such a hypothetical approach for curing the deficiencies of these trawl doors are:
1. the doors still would still experience destabilizing forces of side currents and turns which occur at slower towing speeds that faster towing speeds overcome;
2. the cost of such doors would be approximately six to ten (6 to 10) times greater than that of conventional trawl doors due to the increase in size and the expense of the materials and of the manufacturing methods; and
3. there exists no guarantee that the expense for manufacturing even an experimental set of such doors would ever be recovered.
Furthermore, even if the larger trawl doors solved the slower towing speed stability problems, there exists a concern that their commercial viability. Consequently, commercial considerations have prevented producing Aoversized≅ trawl doors that combine the teachings of the '016 and '722 PCT patent applications in an attempt to solve the deficiencies experienced at slower towing speeds which occur in the majority of the world=s trawl fisheries.

Based upon results obtained by additional flume tank experimentation, presently it is believed that flume tank testing previously employed when engineering such trawl doors utilized a methodology that, by having models of such trawl doors fixed into place on highly sensitive measuring equipment to accurately measure lift and drag values, prevented encountering the trawl doors' instability. In fact, when the trawl doors failed during sea trials initially instability was not suspected as causing the failure. Instead, the failure was initially attributed to inadequate rigging parameters or an inadequate connection point of the main wire or warp to the trawl door. Only recently has it been discovered that these assumptions and beliefs were incorrect. Only now, using different flume tank modeling methodology, has the inherent instability of such trawl doors at larger angles of attack at which the vast majority of fishing vessels worldwide operate been encountered during flume tank testing.

Thus, as described above and for the reasons appearing there, only recently it has become apparent that trawl doors constructed in accordance with the '016 and '722 PCT patent applications are inherently and fatally unstable at the larger angles of attack at which the vast majority of the worlds trawling vessels operate. Furthermore, it has only been realized recently that the fundamental cause for trawl door instability at larger angles of attack is using leading edge slats having conventional configuration and construction in combination with the airfoil main deflector disclosed in the '016 PCT patent application. That is, trawl doors of the type disclosed both in the '016 and in the '722 PCT patent applications fail at larger angles of attack when equipped with conventional leading edge slats.

Thus, there exists a long felt need for a trawl door that is highly efficient at larger angles of attack and can thus be used at slower towing speeds, while not markedly larger in size than existing trawl doors.

There also exists a long felt need for a trawl door that is highly efficient at larger angles of attack that can be manufactured and sold at a reasonable cost.

Thus, the need for a highly efficient trawl door that operates at slower towing speeds while still being of a size and concurrent production cost that make it economically feasible continues in the industry.

Furthermore, there exists a desire in the industry for a highly efficient trawl door that operates well both at faster towing speeds and smaller angles of attack as well as at slower towing speeds and larger angles of attack. Trawl doors exhibiting such characteristics would be less expensive for customers in comparison with having two pairs of trawl doors, i.e. one pair for each situation.

### DEFINITIONS

AIRFOIL PROFILE: means a profile for a main wing and/or main deflector (the terms "main wing" and "main deflector" being synonymous for purposes of this disclosure) of a trawl door wherein the camber of the outer side of the main deflector is greater than the camber of the inner side thereof. As stated in the '016 PCT patent application:
[a] highly efficient low-speed high-lift airfoil profile may be viewed by utilizing a software program known as "VisualFoil Version 4.1" produced and sold by Hanley Innovations/Dr. P. Hanley, Ocala, FL)". A maximally efficient low-speed high-lift airfoil profile is found in the "VisualFoil Version 4.1" software where it is known by the profile name and/or code "NACA-338117".

ASPECT RATIO: means the height of a trawl door's primary lift generating structures relative to the width of the trawl door's primary lift generating structures. For example, a trawl door having a height of two (2) meters and a width of one (1) meter has an Aspect Ratio of 2:1 (two to one).

PROFILE: means the cross-sectional shape of a trawl door, or of a portion of a trawl door, viewed in a plane that is oriented perpendicularly across the trawl door's vertical dimension.

TRAWL DOOR: means any of a variety of essentially rigid structures having generally rigid deflectors (e.g. not formed of a foldable fabric as a kite) that is adapted for deployment in a body of water behind a towing vessel. More specifically, trawl door means any generally wing shaped and/or fin shaped device used to spread either a fishing net, such as a trawl, or to spread a seismic surveillance array and/or seismic array, such as used in making acoustic surveillance of a sea floor and sub-sea-floor, or to spread apart any other towed item, whether in air or sea. A trawl door usually attaches at a fore end to a terminal end of a main towing warp or other towing line depending from the towing vessel, and at an aft end to at least one other line itself ultimately attached to another towed item. In operation, trawl doors convert a portion of forward motion and/or energy imparted by the towing vessel into horizontally directed force for the purpose of spreading in a generally horizontal direction a trawl, seismic surveillance towed array complex, paravane line or the like.

TRAWL DOOR HEIGHT: the height of a trawl door is defined by the shortest distance between a trawl door's primary lift generating structures' upper edge and a trawl door's primary lift generating structures' lower edge. The Trawl Door Height measurement generally does not include any part of a purely weight shoe, wear plate, or the like, but rather relates to the portion of the trawl door's structure that is capable of efficiently generating lift and/or thrust.

TRAWL DOOR WIDTH: the width of a trawl door is defined by the shortest distance between a trawl door's primary lift generating structures' leading and trailing edges as taken from a profile of a portion of the trawl door. For trawl doors with straight leading and trailing edges, the width is generally the same everywhere along the vertical dimension of the trawl door. For a trawl door with a "swept back" configuration, the trawl door's width also may be expressed as an average of a sum of several trawl door width measurements taken at various profile locations located at varying positions along the vertical dimension of the trawl door, as such trawl doors typically have narrower widths at their extremities than at the middle thereof.

### Disclosure

An object of the present disclosure is to provide a more stable trawl door.

Yet another object of the present disclosure is to provide a trawl door that operates more efficiently at a larger angle of attack, such as at greater than thirty degrees (30°), and particularly greater than thirty-six degrees (36 °) including forty degrees (40°).

Yet another object of the present disclosure is to provide a trawl door that, while operating stably at a larger angle of attack, also operates stably at smaller angles of attack such as eighteen degrees (18°).

It is an object of the present disclosure to teach a trawl door construction and methods for use that meets such needs of the industry.

This is achieved by a trawl door adapted for being towed through water according to claim 1 and, as described in introduction in connection with WO 2006/048258 A1, the trawl door including at least one main deflector having a profile formed by an inner surface and an outer surface. The profile of the main deflector spans a chord length "C" that extends along a Chord Direction Line between leading and trailing edges of the main deflector. The trawl door includes at least one leading edge slat at least a portion of which is located in front of the outer surface of the main deflector.

The trawl door has an acute angle of inclination between a chord line of the leading edge slat and the Chord Direction Line of the main deflector.

The trawl door according to the invention is peculiar in that the angle of inclination is at least thirty-five degrees (35°).

Configured in this way, the improved trawl door betters, in comparison with a conventional trawl door, at least one trawl door efficiency characteristic selected from a group consisting of:
a. trawl door stability when the trawl door is towed through water at a high angle of attack;
b. trawl door drag;
c. a numerical value obtained by dividing a lift coefficient measured for the improved trawl door by a drag coefficient measured for the improved trawl door; and
d. noise generation.

An advantage of trawl doors constructed in accordance with the present disclosure having experimentally determined forward and trailing leading edge slat configurations with angles of attack therefor as disclosed herein exhibit greater stability than trawl doors having a conventional configuration.

Another advantage of trawl doors constructed in accordance with the present disclosure having experimentally determined forward and trailing edge slat configurations with angles of attack therefor as disclosed herein is that the trawl doors exhibit significantly less drag than trawl doors having a conventional configuration both at shallower angles of attack, e.g. eighteen degrees (18°) to twenty-five degrees (25°), and at larger angles of attack, e.g. thirty-five degrees (35°) to forty degrees (40°) or more.

These and other features, objects and advantages will be understood or apparent to those of ordinary skill in the art from the following detailed description of the preferred embodiment as illustrated in the various drawing figures.

### Brief Description of Drawings

FIG. 1 is a planform view of a trawl door having a main deflector body, which may be V-shaped, (dihedral) trawl door, illustrating a type of trawl door to which the present disclosure is applicable;
FIG. 2A is a planar cross-sectional diagram taken along the line 2-2 in FIG. 1 illustrating a trawl door profile exemplifying one particular type of trawl door configuration to which the present disclosure is applicable for which the main deflector body has an airfoil profile;
FIG. 2B is a planar cross-sectional diagram, identical to that of FIG. 2A, illustrating chord lines and angle of inclinations respectively for a pair of leading edge slats with respect to the main deflector body for trawl door profiles;
FIG. 2C is a planar cross-sectional diagram, identical to that of FIGs. 2A and 2B, illustrating various important distances for trawl door profiles;
FIG. 3 is a planar cross-sectional diagram taken along the line 2-2 in FIG. 1 illustrating a trawl door profile exemplifying another type of trawl door configuration to which the present disclosure is applicable for which a arcuate plate forms the main deflector body; and
FIG. 4 is a table that provides detailed technical information useful in constructing, in accordance with the present disclosure, trawl doors having deflector bodies formed with the arcuate plate profile depicted in FIG. 3.

### Best Mode for Carrying Out the Disclosure

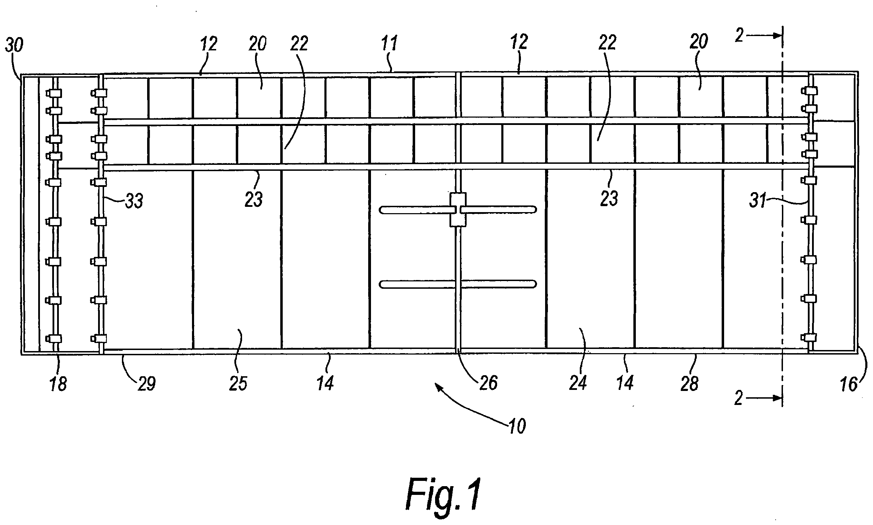

A typical trawl door in accordance the present disclosure may be a V-shaped, i.e. dihedral, trawl door identified in FIG. 1 by the general reference character 10. As illustrated in FIG. 1, trawl door 10 has a trawl door leading edge 12, a trawl door trailing edge 14, a trawl door upper edge 16 and a trawl door lower edge 18. The trawl door 10 is assembled by securing an upper trawl door section 28 to a lower trawl door section 29 at a center plate 26. The center plate 26, to which a towing warp connects (not depicted in FIG. 1), is part of a load bearing frame included in the trawl door 10. The load bearing frame of the trawl door 10 transmits towing forces from the warp connected thereto to a towed trawl or other item.

Each trawl door section 28, 29 respectively includes a main deflector body 24, 25. A pair of forward and trailing leading edge slats 20, 22 provide the trawl door 10 with a lift enhancing structure. A leading edge 11 of the forward leading edge slat 20, located forward of the main deflector bodies 24, 25, constitutes the leading edge 12 of the trawl door 10. At least a portion of the trailing leading edge slat 22 is situated between the forward leading edge slat 20 and the main deflector bodies 24, 25. Configured in this way, the forward and trailing leading edge slats 20, 22 establish a pair of slots, not illustrated in FIG. 1, located respectively:
1. between the pair of forward and trailing leading edge slats 20, 22; and
2. between the trailing leading edge slat 22 and a convex outer surface 47 of the respective main deflector bodies 24, 25.
Trailing edges of the main deflector bodies 24, 25 constitute the trailing edge 14 of the trawl door 10.

The slots established by the forward and trailing leading edge slats 20, 22 extend substantially the entire length of each of the main deflector bodies 24, 25 of each trawl door section 28, 29. The forward and trailing leading edge slats 20, 22 and are held in position by fixing opposite ends thereof respectively to the center plate 26, and to plates 31, 33 respectively of the trawl door section 28, 29.

Detachably affixed to the lower trawl door section 29 furthest from the center plate 26 is an adjustable mass weight plate 30. The adjustable mass weight plate 30 aids in stabilizing the trawl door 10 during field operations by affixing an appropriate amount of weight at the lower edge 18 of the lower trawl door section 29 for the purpose of establishing a desired underwater operating depth for the trawl door 10.

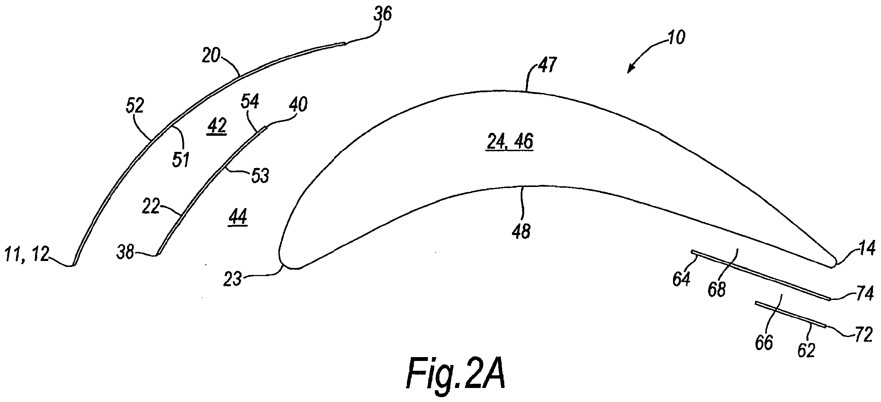

FIG. 2A illustrates one type of profile 46 as may be used for main deflector body 24 of the trawl door 10, and also for the main deflector body 25 thereof.

The profile 46 illustrated in FIG. 2A includes the convex outer surface 47 and a concave inner surface 48 that span between a leading edge 23 of the main deflector body 24 and trailing edge 14 of the main deflector body 24. As described previously for FIG. 1, disposed forward of the leading edge 23 of the main deflector body 24 is the lift enhancing structure of the forward and trailing leading edge slats 20, 22. As depicted in FIG. 2A, at least a portion of the forward and trailing leading edge slats 20, 22 are respectively located forward of the outer surface 47 of the main deflector bodies 24, 25. In addition to the leading edge 11, the forward leading edge slat 20 has a trailing edge 36, an inner side surface 51 and an outer side surface 52. Correspondingly, the trailing leading edge slat 22 has a leading edge 38, a trailing edge 40, an inner side surface 53 and an outer side surface 54. As described previously, that portion of the forward and trailing leading edge slats 20, 22 included in the upper trawl door section 28 are held spaced from the main deflector body 24 by fixing opposite ends thereof to the center plate 26 and to the plate 31. The forward and trailing leading edge slats 20, 22 establish a pair of leading edge slots 42, 44 located respectively between the pair of forward and trailing leading edge slats 20, 22, and between the trailing leading edge slat 22 and the outer surface 47 of the respective main deflector bodies 24, 25. The combined forward and trailing leading edge slats 20, 22 enhance lift by energizing the boundary layer of water flowing over the outer surface 47 of the main deflector body 24 depicted in FIG. 2A.

FIG. 2A also depicts a further enhancement which maybe included in the trawl door 10 depicted in FIG. 1. This enhancement to the trawl door 10 depicted in FIG. 1 adds a trailing edge lift enhancing structure in the form of one or more trailing edge slats 62, 64. The trailing edge slats 62, 64 are located beneath the concave inner surface 48 of the profile 46 to establish inner and outer trailing edge slots 66, 68. The trailing edge slats 62, 64 are generally flat and extend along the length of the trailing edge 14, and, similar to the forward and trailing leading edge slats 20, 22, are fixed at opposite ends to the center plate 26 and to the plate 31. The trailing edge slats 62, 64 lie generally parallel to the portion of the concave inner surface 48 near the trailing edge 14 of the main deflector body 24. The trailing edge slat 62 furthest from the inner surface 48 is approximately half as wide as the trailing edge slat 64 that is nearer to the inner surface 48. The trailing edge slats 62, 64 respectively have trailing edges 72, 74 that are generally aligned with the trailing edge 14 of the main deflector body 24. The trailing edge slats 62, 64 enhance performance of the trawl door 10 by maintaining the boundary layer of water flowing past the concave inner surface 48 of the profile 46.

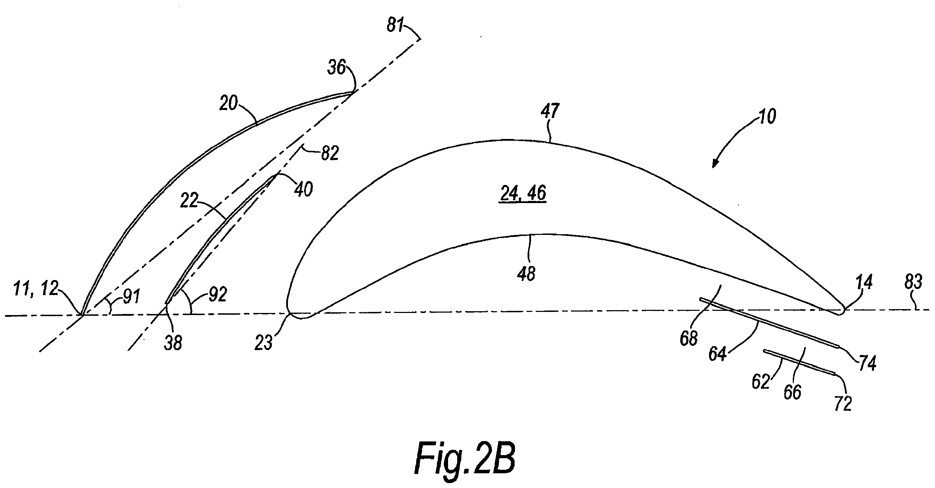

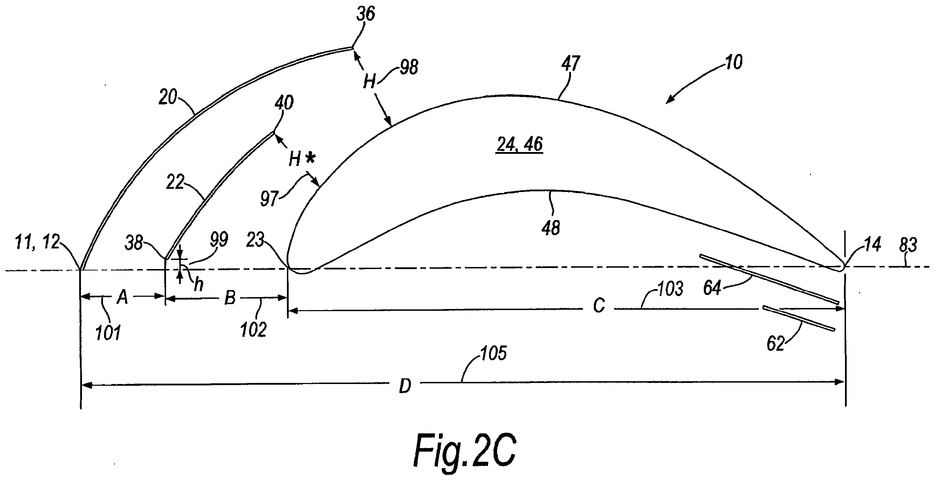

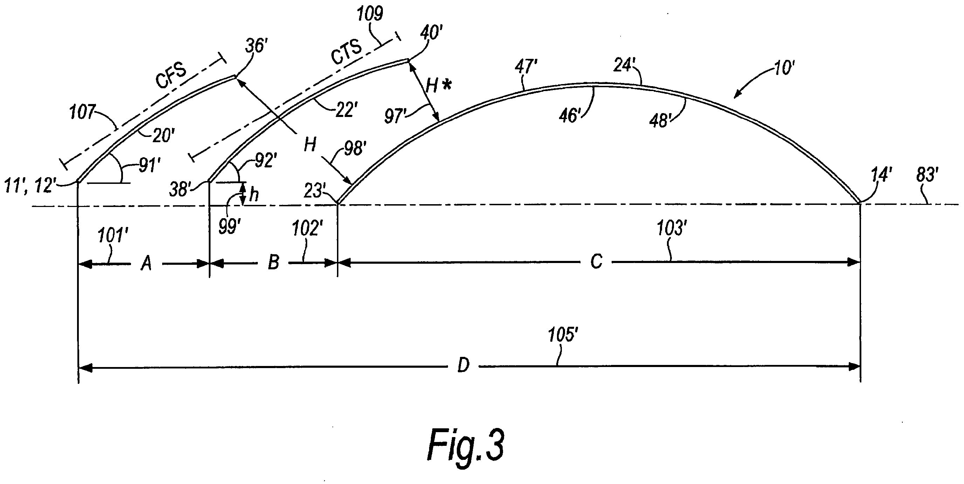

The cross-sectional diagram of FIG. 2B differs from that of FIG. 2A by depicting a dashed line 81 that passes through the leading edge 11, 12 and the trailing edge 36 of the forward leading edge slat 20 to illustrate a chord line therefor. Similarly, a dashed line 82 in FIG. 2B passes through the leading edge 38 and trailing edge 40 of the trailing leading edge slat 22 correspondingly to illustrate a chord line therefor. Lastly, a dashed line 83 that passes through the leading edge 23 and the trailing edge 14 of the main deflector body 24 depicts "Chord Line" for the main deflector body 24. The "chord length of the main deflector" is a length "C," depicted in FIGs. 2C and 3 and identified by the reference number 103, along the dashed line 83 from the leading edge 23 of the main deflector body 24 to the trailing edge 14 thereof.

An intersection of the dashed line 81 with the dashed line 83 establishes a vertex for an acute angle of inclination 91, that extends from the dashed line 83 to the dashed line 81, for the forward leading edge slat 20 with respect to the dashed line 83, i.e. between the chord lines respectively for the forward leading edge slat 20 and the main deflector body 24. Reference numeral 91 indicates a "forward leading slat angle," that is also known as the "angle of inclination of the leading slat." Similarly, an intersection of the dashed line 82 with the dashed line 83 establishes a vertex of an acute angle of inclination 92, that extends from the dashed line 83 to the dashed line 82, for the trailing leading edge slat 22 with respect to the dashed line 83, i.e. between the chord lines respectively for the trailing leading edge slat 22 and the main deflector body 24. Reference numeral 92 indicates a "trailing leading slat angle," that is also known as the "angle of inclination of the trailing slat."

As is readily apparent from the preceding descriptions of the lengths "A" and "B" and from the illustration of FIG. 2C, a length measured from the leading edge 12 of the trawl door 10 to the leading edge 23 of the main deflector bodies 24, 25 along the Chord Line, i.e. the dashed line 83, of the main deflector bodies 24, 25 equals a sum of the length "A" plus the length "B."

A length "h," indicated by reference numeral 99, is a shortest distance from the Chord Line, i.e. the dashed line 83, of the leading edge 11 or 38 respectively of the forward leading edge slat 20 or the trailing leading edge slat 22.

A length "D" indicated by reference numeral 105, identified as the "trawl door width," is the width of the trawl door 10 measured parallel to the Chord Line, i.e. the dashed line 83, from the leading edge 12 of primary lift generating portions of the trawl door 10 to the trailing edge 14 thereof.

Considering FIG. 1 in reference to FIGs. 2A-2C, the disclosed trawl door 10 preferably has an aspect ratio of at least two to one (2 : 1) when adapted for use with a pelagic trawl. When adapted for use with a bottom trawl, the trawl door 10 preferably has a lower aspect ratio. For the trawl door 10 illustrated in FIG. 1, the aspect ratio is the height of the primary lift generating structures, i.e. a distance between the upper edge 16 and the lower edge 18 of the trawl door 10, relative to the width of the primary lift generating structures, i.e. a distance between the leading edge 12 and the trailing edge 14 of trawl door 10.

FIG. 3 depicts an alternative trawl door profile which exemplifies of a different configuration for the trawl door 10 to which the present disclosure also applies. Those elements depicted in FIG. 3 that are common to the trawl door 10 illustrated in FIG. 1 and to the profile 46 illustrated in FIGs. 2A-2C carry the same reference numeral distinguished by a prime ("'") designation. In the embodiment of the trawl door 10 depicted in FIG. 3, the main deflector body 24' has a profile 46 formed by an arcuate plate as do the forward leading edge slat 20' and the trailing leading edge slat 22'.

A length "CFS" indicated by reference numeral 107, referred to as the "chord length of the forward slat," is the distance along the dashed line 81 depicted in FIG. 2B from the leading edge 11' of the forward leading edge slat 20' to the trailing edge 36' thereof.

A length "CTS" indicated by reference numeral 109, referred to as the "chord length of the trailing slat," is the distance along the dashed line 82 depicted in FIG. 2B from the leading edge 38' of the trailing leading edge slat 22' to the trailing edge 40' thereof.

Set forth below are various configurational aspects for characterizing a trawl door 10 which possesses improved performance due to incorporating the present disclosure's teachings therein.
a) Considering the angle of inclination 91 of the forward leading edge slat 20, the angle of inclination 91 is greater than thirty-four degrees (34°), with greater than thirty-six degrees (36 °) being more preferred, with greater than thirty-seven degrees (37 °) being more preferred, with from thirty-seven degrees (37 °) to forty-nine degrees (49 °) being useful, with from thirty-seven degrees (37°) to forty-five degrees (45°) being preferred, with a greatest preference for the forward leading slat's angle selected from a group consisting of:
   i) when the profile 46 of the main deflector bodies 24, 25 is that of an airfoil such as illustrated in FIGs. 2A-2C, from thirty-nine to forty-one degrees (39° to 41°) being more preferred, with forty degrees (40°) being most preferred for a trawl door 10 that has the best performance (e.g. lift and/or thrust) for a given drag at the largest range of angles of attack compared to the known art, and is superior at shallower angles of attack and faster towing speeds compared to the known art while also is far more stable - and in fact is stable - and far more efficient than the known art at larger trawl door angles of attack, e.g. thirty degrees (30°) and greater, and including thirty-five degrees (35°) and greater, even greater than forty degrees (40°);
   ii) when an arcuate plate forms the main deflector body 24' and 25' such as illustrated in FIG. 3, from thirty-nine to forty-nine degrees (39° to 49 °) being more preferred, with forty-five degrees (45°) being most preferred for a trawl door 10' that has the best performance (e.g. lift and/or thrust) for a given drag at the largest range of angles of attack compared to the known art, and is superior at shallower angles of attack and faster towing speeds compared to the known art while also is far more stable - and in fact is stable - and far more efficient than the known art at larger trawl door angles of attack, e.g. thirty degrees (30°) and greater, and including thirty-five degrees (35°) and greater, even greater than forty degrees (40°) ; and
   iii) from forty-two to forty-four degrees (42° to 44°) being more preferred, with forty-three degrees (43°) being most preferred for a trawl door 10 that has particularly high lift at higher angles of attack while still having less drag than the known art, and is far more stable - and in fact is stable - and far more efficient than the known art at larger trawl door angles of attack, e.g. thirty-five degrees (35°) and greater, even greater than forty degrees (40°).
b) Considering a trawl door 10, being particularly differentiated from trawl doors combining the teachings of the '016 and '722 PCT patent applications in that the aspect ratio of the trawl door 10 is less than three to one (3 : 1), the angle of inclination 92 of the trailing leading edge slat 22 is forty-two degrees (42°) or more, and more preferably greater than forty-three degrees (43°), and more preferably greater than forty-four degrees (44°), and more preferably at least forty-five degrees (45°), with a greatest preference for the angle of inclination 92 of the trailing leading edge slat 22 being selected from a group consisting of:
   i) when the angle of inclination 91 of the forward leading edge slat 20 is forty degrees (40°), or at least within one-half percent (0.5%) of forty degrees (40°), the angle of inclination 92 of the trailing leading edge slat 22 is fifty degrees (50°), and also at least within one-half percent (0.5%) of fifty degrees (50°), thereby providing a stable trawl door 10 incorporating a main deflector body 24 or 25 of the instant profile at angles of attack where the known art did not provide a stable trawl door 10, as well as providing a stable and superior efficiency trawl door 10 at shallower trawl door angles of attack compared to the known art; and
   ii) when the angle of inclination 91 of the forward leading edge slat 20 is forty-three degrees (43 °), or at least with one-half percent (0.5%) of forty-three degrees (43°), the angle of inclination 92 of the trailing leading edge slat 22 is fifty-three degrees (53°), and also at least within one-half percent (0.5%) of fifty-three degrees (53°).
c) Considering spacing the leading edge 38 of the trailing leading edge slat 22 from the Chord Line, i.e. the dashed line 83, by a distance "h," indicated by reference numeral 99, that exceeds any distance that the leading edge 11 of the forward leading edge slat 20 is spaced from the Chord Line (which for optimal results the forward leading edge slat 20 may or may not be somewhat spaced from the Chord Line), a ratio of such spacing of the leading edge 38 of the trailing leading edge slat 22 to a spacing of the leading edge 11 of the forward leading edge slat 20 being in a range from eight and six tenths to eight and eight tenths (8.6 to 8.8), with eight and seventy-six hundredths (8.76) being preferred. However, displacing the leading edge 11 or 38 either of the forward leading edge slat 20 or of the trailing leading edge slat 22 any distance from the Chord Line, i.e. the dashed line 83, may be unnecessary for a specific configurations of the trawl door 10. Thus far testing has demonstrated that spacing the leading edge 11 or 38 from the Chord Line may be advantageous for a trawl door 10 in accordance with the present disclosure when the trawl door 10 is intended to be used at greater angles of attack. However, whether spacing the leading edge 11, 38 from the Chord Line is actually advantageous for a particular configuration of the trawl door 10 operating throughout specified ranges of angle of attack and of towing speeds requires experimental verification.
d) For a trawl door 10 in accordance with the present disclosure particularly having an aspect ratio of at least two and seven tenths to one (2.7 : 1), and even more preferably at least three to one (3 : 1) the angle of inclination 92 of the trailing leading edge slat 22 is forty-two degrees (42°) or greater, and more preferably greater than forty-three degrees (43°), and more preferably greater than forty-four degrees (44°), and more preferably at least forty-five degrees (45°), with a greatest preference for the angle of inclination 92 of the trailing leading edge slat 22 being selected from a group consisting of:
   i) when the angle of inclination 91 of the forward leading edge slat 20 is thirty-four degrees (34°), or at least within one degree (1°) less than to three degrees (3°) greater than thirty-four degrees (34°), the angle of inclination 91 of the forward leading edge slat 20 is forty-four degrees (44°), and also at least within one degree (1°) less than to three degrees (3°) greater than of forty-four degrees (44°), thereby providing a stable trawl door 10 incorporating a main deflector body 24 or 25 of the instant profile at angles of attack where the known art did not provide a stable trawl door 10, as well as providing a stable and superior efficiency trawl door 10 at shallower angles of attack compared to the known trawl doors such as has been shown especially useful at angles of attack near and from twenty-five to thirty degrees (25° to 30°) .

A trawl door 10 configured in accordance with preceding criteria (a) through (d) exhibits improved performance and efficiency at larger angles of attack, is useful at all angles of attack, while being highly stable, and having a superior hydrodynamic stability at a widest range of angles of attack compared with the known art.

### Industrial Applicability

Referring back to FIGs. 2A-2C, as stated previously and in accordance with this disclosure a particularly exemplary trawl door 10 having a cross-sectional shape like that illustrated in those FIGs., i.e. an airfoil profile 46, has an aspect ratio of, in this example, two to one (2 : 1) and at least two to one (2 : 1).
Also for this exemplary trawl door 10:
1. the trailing slat trailing edge gap, "H*," identified by reference numeral 97, is forty-eight to forty-nine millimeters (48-49 mm), i.e. from fourteen and fifty-five hundredths percent (14.55%) to fourteen and eighty-five hundredths percent (14.85%) of the chord length "C" of the main deflector body 24;
2. the angle of inclination 91 between the chord line of the forward leading edge slat 20, indicated by the dashed line 81, and the Chord Line of the main deflector body 24, indicated by the dashed line 83, is forty degrees (40°) ; and
3. the angle of inclination 92 between the chord line of the trailing leading edge slat 22, indicated by the dashed line 82, and the Chord Line of the main deflector body 24, indicated by the dashed line 83, is fifty degrees (50°).

In comparison with conventional trawl doors, this configuration for the disclosed trawl door 10 is advantageous for:
1. reducing drag of the trawl door 10 while concurrently increasing lift thereof at shallower angles of attack; while concurrently
2. providing a trawl door 10 that is stable at larger angles of attack thereby providing dramatically improved performance at larger angles of attack.

Considering now a trawl door 10 having the cross-sectional configuration illustrated in FIG. 3 wherein the main deflector body 24 has an arcuate plate profile rather than by an airfoil profile, the presently preferred angle of inclination 91 between the chord line of the forward leading edge slat 20, indicated by the dashed line 81, and the Chord Line of the main deflector body 24, indicated by the dashed line 83, is forty-five degrees (45°), and the presently preferred angle of inclination 92 between the chord line of the trailing leading edge slat 22, indicated by the dashed line 82, and the Chord Line of the main deflector body 24, indicated by the dashed line 83, is thirty-one degrees (31°). However, it is anticipated that values for the angle of inclination 91 that are within plus or minus nine degrees (9°) of forty-five degrees (45°) are useful for achieving this disclosure's purposes. For example, a trawl door 10 having an angle of inclination 91 for the forward leading edge slat 20 that is within one-half degree (0.5°), one degree (1°), one and one-half degrees (1.5°), two degrees (2°), three degrees (3°), four degrees (4°), five degrees (5°), six degrees (6°), seven degrees (7°), eight degrees (8°) or nine degrees (9°) of forty-five (45°) are anticipated to be useful for achieving the purposes of this disclosure. Similarly, it is anticipated that values for the angle of inclination 92 that are within plus or minus two degrees (2°) of thirty-one degrees (31°) are anticipated to be useful for achieving the purposes of this disclosure. Moreover, for the reason stated previously any combination of values within the ranges specified above is intended to be encompassed by the present disclosure and by any of the following claims.

The structure of the lift generating portion of the profile of the trawl door of the present disclosure shown in FIG. 3 is generally accurate to scale as far as the structures themselves, i.e. each slat, and the main deflector, though the angles of inclination of the leading slats is not necessarily shown in the most ideal angles and thus the written description contained hereto should be referred to for such information.

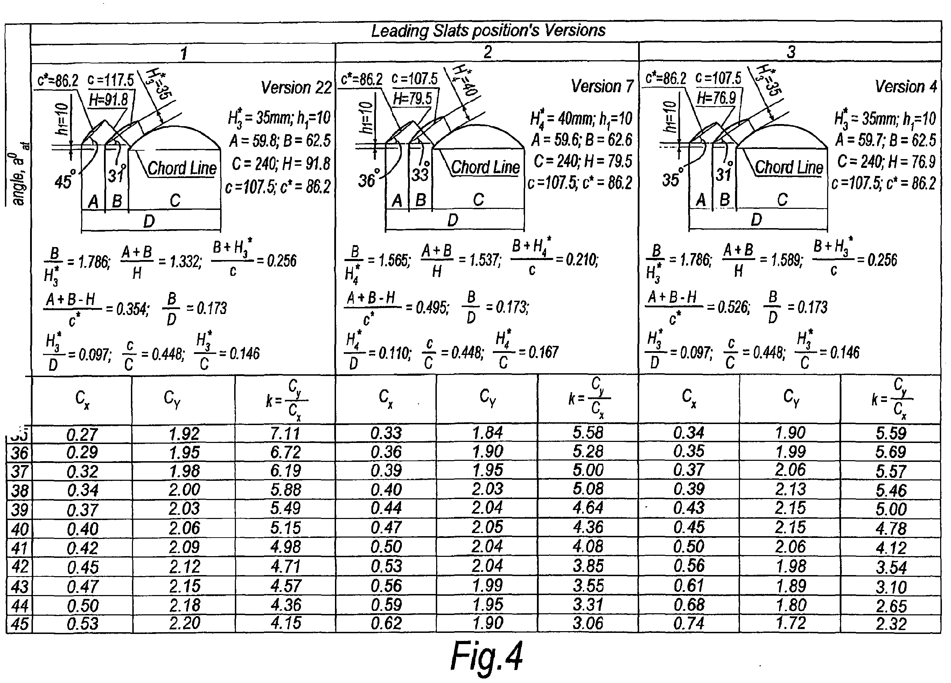

The table appearing in FIG. 4 provides detailed technical information useful in constructing, in accordance with the present disclosure, trawl doors 10' having an arcuate plate main deflector body 24', 25'. The table, along the left hand edge thereof, includes a column of angle of attack values. Extending to the right from the column of angle of attack values across the table are three (3) columns of flume tank test results for three differing configurations for the trawl door 10', i.e. Versions 22, 7 and 4. Each of these vertical columns of data for a particular version of the trawl door 10' presents three (3) different types of information. The left hand column for each trawl door version, labeled Cₓ, presents the drag coefficient measured at various angles of attack for the trawl door version identified at the top of the column. The center column, labeled C_{y}, presents the lift coefficient measured at various angles of attack for that version. Finally, the right hand column, labeled k = C_{y}/Cₓ, presents the ratio of the lift coefficient divided by the drag coefficient at various angles of attack for the trawl door version identified at the top of the column. For versions of the trawl door 10' appearing in FIG. 4, Version 22 is preferred in comparison with the other versions of the trawl door 10' for which data appears in that FIG.

For the arcuate plate trawl door 10' depicted in FIGs. 3 and 4 particularly Version 22, the main deflector body 24', forward leading edge slat 20' and trailing leading edge slat 22' are all preferably formed with the same radius of curvature. For a trawl door 10' with an aspect ratio of approximately two and six tenths (2.6) and having a projected area of the planform within five percent (5%) of seven and one-tenth square meters (7.1 m²), the projected area of the planform being apparent in FIG. 1 where it is bounded by the leading edge 12, the trailing edge 14 and the plates 31, 33, a radius of curvature of seven hundred forty millimeters (740 mm) is useful, as well as a radius within 50% of seven hundred forty millimeters (740 mm), and especially within 25% of seven hundred forty millimeters (740 mm), including when the radius of the forward leading edge slat 20', 22' and the main deflector body 24', 25' are within 30% of each other and the radius of curvature of the main deflector body 24' 25' are within thirty percent (30%) of seven hundred forty millimeters (740 mm). For this trawl door 10', the forward leading slat angle, indicated by angle of inclination 91', is preferably forty-five degrees (45°), and the trailing leading slat angle, indicated by angle of inclination 92' is preferably thirty-one degrees (31°), with the values for other characteristics of the trawl door 10' as shown in FIG. 4 for Version 22. Furthermore, any trawl door 10' of any size should be directly scaled using known methods from such seven and one-tenth square meters (7.1 m²) trawl door 10'.

The distance "h" indicated by reference numeral 99 is preferably within 50% of being 0.042 times the distance "C", and more preferably within 25%, and yet more preferably within 15%. However, a distance "h" that is uniform or within 25% of being uniform for all leading slats is useful, with a distance "h" being 0.0417 times the distance "C" being highly useful. If the trawl door has more than one leading slat, often a more forward leading slat (e.g. the forward leading slat) can usefully have a distance "h" that is greater than a more aft leading slat's (e.g. the trailing leading slat's) distance "h". Due to the effects of various trawl door non-primary lift and/or thrust generating structures on various aspects of the trawl door 10 (e.g. attachment hardware, external strengthening and supporting structures, wear plates when needed and the like), fabricating a trawl door 10 in accordance with the present disclosure requires experimentation to determine optimum values for various parameters appearing in FIGs. 2A-2C, 3 and/or 4 and/or described herein. Consequently, deriving precise construction values by empirically determined modification(s) of the present disclosure's teachings is encompassed by the following claims.

Depending upon a particular trawl door application, the preceding disclosures regarding forward and trailing leading edge slats 20, 22 are applicable both to straight trawl doors as well as to V-shaped trawl doors. Similarly, the preceding disclosures regarding forward and trailing leading edge slats 20, 22 are applicable to trawl doors 10 where the lower trawl door section 29 is longer and/or has a greater surface area and/or greater lift generating ability than the upper trawl door section 28, often in order to create tendency for the trawl door 10 to rise upwards towards the sea surface. Such trawl doors 10 where the lower trawl door section 29 exhibits greater lift generating ability than the upper trawl door section 28 are usually preferred for shallow water pelagic trawling. Depending upon a particular application, trawl doors 10 in accordance with the present disclosure can have various distributions above and below their balance point and/or main bracket whether used either with pelagic trawls or bottom trawls. A main bracket with several options in both the horizontal as well as the vertical dimension, including the back-and-forth and the up-and-down dimensions, is useful for ensuring that a particular vessel is able to find a suitable connection point for the main warp to the trawl door 10 that provides the needed balance, orientation and angle of attack of the trawl door 10 for the particular item being towed.

It is important to note that the forward and trailing leading edge slats 20, 22 disposed forward of the main deflector bodies 24, 25 are smaller in overall dimension than the main deflector bodies 24, 25. If a trawl door or paravane includes several main deflectors, no one main deflector is considered a slat for the purpose of the present disclosure.

Although the present disclosure has been described in terms of presently preferred embodiments, it is to be understood that such descriptions are purely illustrative and are not to be interpreted as limiting. Consequently, various alterations, modifications, and/or alternative applications of the disclosure will, no doubt, be suggested to those skilled in the art after having read the preceding disclosure.

## Claims

1. A trawl door (10) adapted for being towed through water, the improved trawl door (10) including at least one main deflector (24, 25) having a profile (46) formed by an inner surface (48) and an outer surface (47), the profile (46) of the main deflector (24, 25) spanning a chord length "C" (103) that extends along a Chord Direction Line (83) between leading and trailing edges (23, 14) of the main deflector (24, 25), the improved trawl door (10) also including at least one leading edge slat (20, 22) at least a portion of which is located in front of the outer surface (47) of the main deflector (24, 25),
the trawl door (10) having an acute angle of inclination (91, 92) between a chord line (81, 82) of the leading edge slat (20, 22) and the Chord Direction Line (83) of the main deflector (24, 25), **characterized in that** the acute angle of inclination (91, 92) is at least thirty-five degrees (35°).

2. The trawl door (10) of claim 1 wherein the acute angle of inclination (91, 92) between the chord line (81, 82) of the leading edge slat (20, 22) and the Chord Direction Line (83) of the main deflector (24, 25) is at least thirty-six degrees (36°) .

3. The trawl door (10) of claim 2 wherein the acute angle of inclination (91, 92) between the chord line (81, 82) of the leading edge slat (20, 22) and the Chord Direction Line (83) of the main deflector (24, 25) is at least thirty-eight degrees (38°).

4. The trawl door (10) of claim 3 wherein the acute angle of inclination (91, 92) between the chord line (81, 82) of the leading edge slat (20, 22) and the Chord Direction Line (83) of the main deflector (24, 25) is at least forty-five degrees (45°).

5. The trawl door (10) of claim 1 wherein the improved trawl door (10) is further **characterized by** having an aspect ratio that exceeds two and seven tenths to one (2.7 : 1.0).

6. The trawl door (10) of claim 5 wherein the improved trawl door (10) is further **characterized by** having an aspect ratio that exceeds three to one (3.0 : 1.0).

7. The trawl door (10) of any preceding claim wherein the leading edge slat (20, 22) is a forward leading edge slat (20), and the trawl door (10) further includes a trailing leading edge slat (22), at least a portion of the trailing leading edge slat (22) being located between the forward leading edge slat (20) and the outer surface (47) of the main deflector (24, 25) with a leading edge (38) of the trailing leading edge slat (22) being disposed nearer to the leading edge (23) than to the leading edge (11) of the forward leading edge slat (20), wherein the acute angle of inclination (92) of the trailing leading edge slat (22) between a chord line (82) of the trailing leading edge slat (22) and the Chord Direction Line (83) of the main deflector (24, 25) is at least twenty-seven degrees (27°).

8. The trawl door (10) of claim 7 wherein the acute angle of inclination (92) of the trailing leading edge slat (22) between a chord line (82) of the trailing leading edge slat (22) and the Chord Direction Line (83) of the main deflector (24, 25) is at least thirty-one degrees (31°).

9. The trawl door (10) of claim 8 wherein the acute angle of inclination (92) of the trailing leading edge slat (22) between a chord line (82) of the trailing leading edge slat (22) and the Chord Direction Line (83) of the main deflector (24, 25) is at least thirty-three degrees (33°).

10. The trawl door (10) of any preceding claim wherein a leading edge (11, 38) respectively of at least one leading edge slat (20, 22) is spaced from the Chord Direction Line (83) of the main deflector (24, 25) by a length (99) 'h' that is at least twenty-five hundredths (0.25) of the chord length "C" (103) of the main deflector (24, 25).

## Patentansprüche

1. Scherbrett (10), dazu angepasst, durch Wasser gezogen zu werden, wobei das verbesserte Scherbrett (10) mindestens einen Hauptdeflektor (24, 25) enthält, der ein Profil (46) aufweist, das durch eine Innenfläche (48) und eine Außenfläche (47) gebildet wird, wobei das Profil (46) des Hauptdeflektors (24, 25) eine Sehnenlänge "C" (103) überspannt, die sich entlang einer Sehnenrichtungslinie (83) zwischen Vorder- und Hinterkanten (23, 14) des Hauptdeflektors (24, 25) erstreckt, wobei das verbesserte Scherbrett (10) auch mindestens einen Vorflügel (20, 22) enthält, von dem mindestens ein Abschnitt vor der Außenfläche (47) des Hauptdeflektors (24, 25) angeordnet ist,
wobei das Scherbrett (10) einen spitzen Neigungswinkel (91, 92) zwischen einer Sehnenlinie (81, 82) des Vorflügels (20, 22) und der Sehnenrichtungslinie (83) des Hauptdeflektors (24, 25) aufweist, **dadurch gekennzeichnet, dass** der spitze Neigungswinkel (91, 92) mindestens fünfunddreißig Grad (35°) beträgt.

2. Scherbrett (10) nach Anspruch 1, wobei der spitze Neigungswinkel (91, 92) zwischen der Sehnenlinie (81, 82) des Vorflügels (20, 22) und der Sehnenrichtungslinie (83) des Hauptdeflektors (24, 25) mindestens sechsunddreißig Grad (36°) beträgt.

3. Scherbrett (10) nach Anspruch 2, wobei der spitze Neigungswinkel (91, 92) zwischen der Sehnenlinie (81, 82) des Vorflügels (20, 22) und der Sehnenrichtungslinie (83) des Hauptdeflektors (24, 25) mindestens achtunddreißig Grad (38°) beträgt.

4. Scherbrett (10) nach Anspruch 3, wobei der spitze Neigungswinkel (91, 92) zwischen der Sehnenlinie (81, 82) des Vorflügels (20, 22) und der Sehnenrichtungslinie (83) des Hauptdeflektors (24, 25) mindestens fünfundvierzig Grad (45°) beträgt.

5. Scherbrett (10) nach Anspruch 1, wobei das verbesserte Scherbrett (10) ferner **dadurch gekennzeichnet ist, dass** es ein Seitenverhältnis aufweist, das zwei und sieben Zehntel zu eins (2,7 : 1,0) übersteigt.

6. Scherbrett (10) nach Anspruch 5, wobei das verbesserte Scherbrett (10) ferner **dadurch gekennzeichnet ist, dass** es ein Seitenverhältnis aufweist, das drei zu eins (3,0 : 1,0) übersteigt.

7. Scherbrett (10) nach einem der vorhergehenden Ansprüche, wobei der Vorflügel (20, 22) ein vorderer Vorflügel (20) ist und das Scherbrett (10) ferner einen hinteren Vorflügel (22) enthält, wobei mindestens ein Abschnitt des hinteren Vorflügels (22) zwischen dem vorderen Vorflügel (20) und der Außenfläche (47) des Hauptdeflektors (24, 25) angeordnet ist, wobei eine Vorderkante (38) des hinteren Vorflügels (22) näher an der Vorderkante (23) angeordnet ist als an der Vorderkante (11) des vorderen Vorflügels (20), wobei der spitze Neigungswinkel (92) des hinteren Vorflügels (22) zwischen einer Sehnenlinie (82) des hinteren Vorflügels (22) und der Sehnenrichtungslinie (83) des Hauptdeflektors (24, 25) mindestens siebenundzwanzig Grad (27°) beträgt.

8. Scherbrett (10) nach Anspruch 7, wobei der spitze Neigungswinkel (92) des hinteren Vorflügels (22) zwischen einer Sehnenlinie (82) des hinteren Vorflügels (22) und der Sehnenrichtungslinie (83) des Hauptdeflektors (24, 25) mindestens einunddreißig Grad (31°) beträgt.

9. Scherbrett (10) nach Anspruch 8, wobei der spitze Neigungswinkel (92) des hinteren Vorflügels (22) zwischen einer Sehnenlinie (82) des hinteren Vorflügels (22) und der Sehnenrichtungslinie (83) des Hauptdeflektors (24, 25) mindestens dreiunddreißig Grad (33°) beträgt.

10. Scherbrett (10) nach einem der vorhergehenden Ansprüche, wobei jeweils eine Vorderkante (11, 38) von mindestens einem Vorflügel (20, 22) von der Sehnenrichtungslinie (83) des Hauptdeflektors (24, 25) um eine Länge (99) 'h' beabstandet ist, die mindestens fünfundzwanzig Hundertstel (0,25) der Sehnenlänge "C" (103) des Hauptdeflektors (24, 25) beträgt.

## Revendications

1. Panneau de chalut (10) adapté pour être remorqué au travers de l'eau, le panneau de chalut amélioré (10) incluant au moins un déflecteur principal (24, 25) présentant un profil (46) formé par une surface intérieure (48) et une surface extérieure (47), le profil (46) du déflecteur principal (24, 25) couvrant une longueur de corde « C » (103) qui s'étend le long d'une ligne de direction de corde (83) entre des arêtes avant et arrière (23, 14) du déflecteur principal (24, 25), le panneau de chalut amélioré (10) incluant aussi au moins une lame d'arête avant (20, 22), dont au moins une partie est située en face de la surface extérieure (47) du déflecteur principal (24, 25),
le panneau de chalut (10) présentant un angle aigu d'inclinaison (91, 92) entre une ligne de corde (81, 82) de la lame d'arête avant (20, 22) et la ligne de direction de corde (83) du déflecteur principal (24, 25), **caractérisé en ce que** l'angle aigu d'inclinaison (91, 92) est au moins de trente-cinq degrés (35°).

2. Panneau de chalut (10) selon la revendication 1, dans lequel l'angle aigu d'inclinaison (91, 92) entre la ligne de corde (81, 82) de la lame d'arête avant (20, 22) et la ligne de direction de corde (83) du déflecteur principal (24, 25) est au moins de trente-six degrés (36°).

3. Panneau de chalut (10) selon la revendication 2, dans lequel l'angle aigu d'inclinaison (91, 92) entre la ligne de corde (81, 82) de la lame d'arête avant (20, 22) et la ligne de direction de corde (83) du déflecteur principal (24, 25) est au moins de trente-huit degrés (38°).

4. Panneau de chalut (10) selon la revendication 3, dans lequel l'angle aigu d'inclinaison (91, 92) entre la ligne de corde (81, 82) de la lame d'arête avant (20, 22) et la ligne de direction de corde (83) du déflecteur principal (24, 25) est au moins de quarante-cinq degrés (45°).

5. Panneau de chalut (10) selon la revendication 1, dans lequel le panneau de chalut amélioré (10) est en outre **caractérisé en ce qu'**il comprend un rapport d'aspect qui excède deux virgule sept dixièmes à un (2.7 : 1.0).

6. Panneau de chalut (10) selon la revendication 5, dans lequel le panneau de chalut amélioré (10) est en outre **caractérisé en ce qu'**il comprend un rapport d'aspect qui excède trois à un (3.0 : 1.0).

7. Panneau de chalut (10) selon une quelconque revendication précédente, dans lequel la lame d'arête avant (20, 22) est une lame d'arête avant avant (20), et le panneau de chalut (10) inclut en outre une lame d'arête avant arrière (22), au moins une partie de la lame d'arête avant arrière (22) étant située entre la lame d'arête avant avant (20) et la surface extérieure (47) du déflecteur principal (24, 25) avec une arête avant (38) de la lame d'arête avant arrière (22) étant agencée plus près de l'arête avant (23) que de l'arête avant (11) de la lame d'arête avant avant (20), dans lequel l'angle aigu d'inclinaison (92) de la lame d'arête avant arrière (22) entre une ligne de corde (82) de la lame d'arête avant arrière (22) et la ligne de direction de corde (83) du déflecteur principal (24, 25) est au moins de vingt-sept degrés (27°).

8. Panneau de chalut (10) selon la revendication 7, dans lequel l'angle aigu d'inclinaison (92) de la lame d'arête avant arrière (22) entre une ligne de corde (82) de la lame d'arête avant arrière (22) et la ligne de direction de corde (83) du déflecteur principal (24, 25) est au moins de trente-et-un degrés (31°).

9. Panneau de chalut (10) selon la revendication 8, dans lequel l'angle aigu d'inclinaison (92) de la lame d'arête avant arrière (22) entre une ligne de corde (82) de la lame d'arête avant arrière (22) et la ligne de direction de corde (83) du déflecteur principal (24, 25) est au moins de trente-trois degrés (33°).

10. Panneau de chalut (10) selon une quelconque revendication précédente, dans lequel une arête avant (11, 38) respectivement d'au moins une lame d'arête avant (20, 22) est espacée de la ligne de direction de corde (83) du déflecteur principal (24, 25), d'une longueur (99) `h' qui est au moins de vingt-cinq centièmes de la longueur de corde « C » (103) du déflecteur principal (24, 25).
